# EUROPÄISCHE PATENTSCHRIFT

(11) **EP 0 941 711 B1**
(45) Veröffentlichungstag und Bekanntmachung des Hinweises auf die Patenterteilung: **05.01.2005**
(21) Anmeldenummer: 99101638.7
(22) Anmeldetag: 04.02.1999
(51) Int. Cl.: A61C 19/00, A61C 13/15, A61G 15/16

(54) **Lichthärtgerät**
Light curing apparatus
Appareil émetteur de lumière destiné à la polymérisation

(30) Priorität: 09.03.1998 DE 19810042
(43) Veröffentlichungstag der Anmeldung: 15.09.1999
(73) Patentinhaber: Ivoclar Vivadent AG, 9494 Schaan (LI)
(72) Erfinder: Rohner, Gottfried, 9450 Altstätten (LI); Senn, Bruno, 9470 Buchs (LI); Fritsche, Gregor, 9450 Altstätten (LI)
(74) Vertreter: Baronetzky, Klaus, Dipl.-Ing.

(56) Entgegenhaltungen:
- DE-U- 9 212 892
- US-A- 5 013 240
- US-A- 5 397 892

## Beschreibung

Die Erfindung betrifft ein Lichthärteinheit gemäß dem Oberbegriff von Anspruch 1.

Ein derartiges Lichthärtgerät - nachfolgend auch Handgerät genannt - ist aus der EP-A2-166 364 oder beispielsweise der DE-GM 92 12 892 bekannt. Diese bekannten Lösungen weisen eine Kabelverbindung zwischen einem Griff des im wesentlichen pistolenförmigen Handgeräts und der Speisestation für das Handgerät auf. Aus ergonomischen Gründen verläßt das Kabel das Handgerät meist am unteren Ende des Handgriffs, um zu verhindern, daß es bei der Handhabung in der Nähe des Mundes des Patienten stört.

Die Speisestation weist meist eine Aufnahme für die Abstützung des Handgeräts auf, in welche das Handgerät mit seinem Griff einsteckbar ist. Während diese Aufnahme bei akkubetriebenen Handgeräten, wie sie beispielsweise aus der EP-A2-568 800 bekannt sind, in der Regel ohne größere Probleme zu realisieren ist, erfordert die leistungsstärkere, kabelgestütze Version eines Handgeräts, die von der Akku-Betriebsdauer unabhängig ist, besondere Maßnahmen an der Aufnahme, um die Kabelführung trotz Steckbarkeit zu gewährleisten.

Die DE-GM 92 12 892 sieht hierzu spezielle Schlitze vor, die aber erfordern, daß das Kabel genau an dieser Stelle und dementsprechend mühsam eingeführt werden muß. Diese Problematik ist bereits in der genannten Gebrauchsmusterschrift erkannt, so daß sie anstelle eines Schlitzes zwei Schlitze vorschlägt, die beide für den Kabeldurchgang geeignet sein sollen.

Auch wenn durch diese Schlitze eine Mehrzahl von Steckmöglichkeiten, nämlich zwei Steckmöglichkeiten, eingeräumt werden, erfordert das Einführen des Griffs an dieser Stelle in die Aufnahme eine relativ große Handhabungsgenauigkeit und vor allem Aufmerksamkeit des behandelnden Zahnarztes. Gerade das Erfordernis einer erhöhten Aufmerksamkeit ist jedoch bei derartigen Handgeräten unerwünscht, denn der Zahnarzt sollte sich seinen eigentlichen Aufgaben mit voller Konzentration zuwenden können, ohne über eine besondere Handhabungsschwierigkeit eines Hilfsmittels zu stolpern.

Es ist daher verständlich, daß derartige Handgeräte vielfach kurzerhand auf dem Behandlungstisch oder einem Hilfstablett oder dergleichen abgelegt werden. Dort sind die Handgeräte jedoch relativ ungeschützt; das empfindliche Ende des Lichtleiters liegt frei, und beim versehentlichen Berühren des Verbindungskabels zwischen Speisestation und Handgerät kann das Handgerät leicht von dem Tisch oder dergleichen gezogen werden, so daß es beschädigungsgefährdet ist, zumal sowohl die Oberflächen der Handgeräte als auch die Tischoberflächen bereits aus Hygienegründen regelmäßig ausgesprochen glatt sind.

Aus der US-PS 5,013,240 ist ein Dentalwagen bekannt, der es erlauben soll, dem Zahnarzt eine Vielzahl von zahnärztlichen Elementen anzubieten, wobei die zahnärztlichen Instrumente auch je verstaut werden können. In der geschlossenen Stellung entsteht so eine kompakte Einheit. Für das Verstauen wird ein die zahnärztlichen Elemente tragender Bügel abgenommen und in einen Stauraum eingebracht. In dieser Position liegt der Bügel - gegebenenfalls zusammen mit den zahnärztlichen Instrumenten, falls diese nicht herausfallen - locker in dem Stauraum, und der Dentalwagen ist geschlossen.

Demgegenüber liegt der Erfindung die Aufgabe zugrunde, ein Lichthärteinheit gemäß dem Oberbegriff von Anspruch 1 zu schaffen, das hinsichtlich der Handhabung und seiner Lagerung sowohl bei der Akzeptanz durch den behandelnden Zahnarzt als auch hinsichtlich der Ergonomie weiter verbessert ist.

Diese Aufgabe wird erfindungsgemäß durch Anspruch 1 gelöst. Vorteilhafte Weiterbildungen ergeben sich aus den Unteransprüchen.

Gemäß der Erfindung ist das Lichthärtgerät an der Speisestation an einer Aufnahme abstützbar, wobei die Aufnahme für das Lichthärtgerät lösbar an der Speisestation gelagert ist und im Bedarfsfall abnehmbar ist. Die Aufnahme zusammen mit dem Lichthärtgerät kann von der Speisestation getrennt und separat gelagert bzw. abgestellt werden.

Gemäß einem besonders vorteilhaften Gesichtspunkt der Erfindung ist es vorgesehen, daß die Aufnahme derart ausgebildet ist, daß das Handgerät mindestens teilweise vor dem Griff abgestützt werden kann, wobei es besonders vorteilhaft ist, daß der Schwerpunkt des Handgeräts bei Auflage auf der Aufnahme derart oberhalb der Aufnahme ist, daß ein Lot durch den Schwerpunkt deutlich beabstandet von den Rändern der Aufnahme durch diese verläuft. Bevorzugt ist eine geneigte Position des Handgeräts auf der Auflage vorgesehen, so daß der Griff des Handgeräts sich dem Benutzer greiffreundlich darbietet. Dennoch ist der empfindliche Lichtleiter besonders gut geschützt, denn er verläuft bevorzugt oberhalb der Speisestation, wobei das abgewinkelte Ende des Lichtleiters auch noch der Speisestation zugewandt sein kann, so daß ein besonderer Schutz gegeben ist.

Bezogen auf die Oberfläche der Speisestation bilden damit der Ständer und der Lichtleiter zusammen mit dem vorderen Ende des Handgeräts im wesentlichen ein Dreieck, wobei die Ausgestaltung der Aufnahme mit einem Bügel den zusätzlichen Vorteil bietet, daß das mit einer erschütterungsgefährdeten Halogen-Lichtquelle ausgerüstete Lichtgerät auch beim raschen Absetzen abgefedert aufgefangen wird, so daß die Lichtquelle deutlich weniger erschütterungsgefährdet ist, als wenn das Handgerät etwa auf einer harten Unterlage kurzerhand abgelegt wird, oder wenn es mit seinem Griff in einer bodenfesten Aufnahme eingesteckt wird.

Eine sanfte Behandlung der Lichtquelle ist aber auch aus dentaltechnischen Gründen besonders wichtig. Es wurde bereits beobachtet, daß durch mehrfache Erschütterungen die Lebensdauer der verwendeten Halogen-Lichtquellen ähnlich deutlich sinkt, wie wenn durch spannungsgesteuertes Einschalten ein hoher Stromstoß die Lichtquelle beeinträchtigt.

Erfindungsgemäß ist es insofern günstig, daß - vorausgesetzt, es erfolgt ein lampenschonendes Einschalten der Lichtquelle - mit einer normalen Lebensdauer der Lichtquelle gerechnet werden kann, und diese nicht durch Erschütterungen überraschend verkürzt wird.

Erfindungsgemäß ist die Aufnahme lösbar an der Speisestation gelagert. Dies eröffnet die Möglichkeit, die Aufnahme von der Speisestation zu trennen und das Handgerät dementsprechend räumlich beabstandet von der Speisestation zu lagern. Der Zahnarzt kann so die Speisestation an einer entfernten Stelle, beispielsweise auch verdeckt und staubgeschützt anordnen, und hat in seinem Arbeitsbereich demnach nur das Handgerät und die der Ablage dienende Auflage. In diesem Zusammenhang ist es besonders günstig, wenn das Kabel über eine lösbare Steckverbindung je mit dem Handgerät und der Speisestation verbunden ist, da dann über in verschiedenen Längen vorgefertigte Kabel eine einfache Anpassung an die räumlichen Verhältnisse möglich ist.

Die Aufnahme für das Lichthärtgerät kann verschiedene Formen aufweisen und z.B. als Ständer aus Kunststoff oder Metall ausgebildet sein. Ein solcher Ständer kann z.B. über 3 Bohrungen in der Speisestation abnehmbar verankert sein und bei Bedarf auf den Tisch gestellt werden. Mit der 3-Punktform ist das Abstellen auf eine ebene Fläche gewährleistet. Der Ständer kann z.B. auch 3 Beine aufweisen, die federnd ausgebildet sind und die sich beim Abstellen spreizen. Der Ständer kann natürlich auch mit einem oder mehreren Füssen ausgestattet sein, die ein Abstellen ermöglichen.

Besonders vorteilhaft ist es ferner, daß das erfindungsgemäße Handgerät vom Zahnarzt gehandhabt werden kann, ohne daß er seine Aufmerksamkeit vom Patienten abwenden und der präzisen Handhabung des Handgeräts zuwenden müßte: auch bei einer Ablage des Handgeräts auf der Aufnahme, ohne daß der Zahnarzt seine Aufmerksamkeit der Ablage zuwendet, insbesondere hinsieht, nimmt die Aufnahme aufgrund der schräg geneigten und seitlich im wesentlichen V-förmigen Abstützung das Handgerät sicher auf und das Handgerät gleitet gleichsam automatisch aufgrund der Schrägstellung der Aufnahme in eine sichere Endlage, und zwar sogar dann, wenn es leicht schräg oder seitlich leicht versetzt aufgesetzt wird.

Gemäß einer weiteren, besonders bevorzugten Ausgestaltung ist es vorgesehen, die Aufnahme als Bügel auszubilden, der auf einem Halter abgestützt ist, der von der Speisestation unabhängig ist. Dieser Halter kann dann ortsfest, beispielsweise durch Klemmschrauben, an einer Arbeitsplatte befestigt sein, während die Speisestation selbst unterhalb der Arbeitsplatte und damit außerhalb des Gesichtskreises des behandelnden Zahnarztes und insofern weniger verschmutzungsempfindlich und insbesondere die im übrigen erforderlichen Tätigkeiten nicht störend angebracht sein kann.

Bei dieser Ausgestaltung dient die Arbeitsplatten-Oberfläche praktisch als Ersatz für die Oberfläche der Speisestation und bietet bereits aufgrund der Anordnung einen Schutz für das relativ empfindliche Lichtleiterende, das insofern ebenfalls wenig verschmutzungsempfindlich ist.

Mit den erfindungsgemäßen Maßnahmen läßt sich mit überraschend wenig aufwendigen und auch von der Herstellung her preisgünstigen Mitteln eine signifikante Verbesserung der Handhabung erzielen, die den Bedürfnissen der Praxis in starkem Maße gerecht wird.

Es versteht sich, daß die genaue Ausgestaltung des erfindungsgemäßen Bügels in weiten Bereichen an die Erfordernisse anpaßbar ist. Bevorzugt ist der Bügel aus zwei Seitenbögen aufgebaut, die sich zueinander symmetrisch erstrecken und eine im wesentlichen U- oder V-förmige Auflagefläche bieten, die selbstzentrierend wirkt. Die Ausgestaltung kann günstigerweise so vorgesehen sein, daß ein Einfädeln des Lichtleiterendes an einem der Bögen oder an dem Mittelbogen bereits formbedingt ausgeschlossen ist, auch wenn das Lichtleiterende abgebogen oder abgekröpft ist und die Abkröpfung nach unten weist.

Hierzu ist bevorzugt der Mittelbogen etwas abgesenkt ausgebildet, so daß das Lichtleiterende sich auch bei sehr unpräziser Handhabung dort nicht verfangen kann.

Während die beschriebenen Ausführungsbeispiele eine Form der Seitenbögen zeigen, die nach vorne geschlossen sind, ist es gemäß einer modifizierten Ausgestaltung auch möglich, Seitenbögen auch eine derartige Form zu geben, daß sie keine Vorderbögen aufweisen, oder die Vorderbögen so auszurichten, daß sie sich radial zum Handgerät erstrecken.

Während bei Handgeräten mit abgebogenen Lichtleiterenden üblicherweise der Lichtleiter verdrehbar ist, so daß er sowohl für die Oberkiefer-Lichtpolymerisation als auch für die Unterkiefer-Lichtpolymerisation in gleich gut handhabbarer Weise eingesetzt werden kann, werden vielfach die Lichtleiter bei Ende der Behandlung so verdreht, daß das Lichtleiterende nach unten weist. Dies ist die von der Verschmutzung her günstigste Stellung, und gerade in dieser häufigsten Stellung bietet die erfindungsgemäße Ausgestaltung des Lichthärtgeräts einen besonderen Schutz für das Lichtleiterende.

Die Bemessung des Abstandes zur Oberfläche, also entweder zur Oberfläche der Speisestation oder zur Arbeitsoberfläche, ist bevorzugt so gehalten, daß auch beim maximalen Einfedern des Bügels und bei entsprechend ungestümer Handhabung das Lichtleiterende noch deutlich von der Oberfläche beanstandet ist, während es günstig ist, daß in der ruhenden und entspannten Position des Bügels das Lichtleiterende höchstens wenige Zentimeter von der Oberfläche entfernt ist, um insofern einen besonders guten Schutz zu gewährleisten.

Gemäß einem weiteren, besonders vorteilhaften Gesichtspunkt der Erfindung ist es vorgesehen, daß die Aufnahme aus leicht zu reinigendem und zu desinfizierendem Draht besteht und steckbar ist. Bei Bedarf kann der Drahtbügel dementsprechend abgezogen und vollständig in ein Desinfektionsbad eingelegt werden; auch wenn dies nicht erforderlich ist, ist die erfindungsgemäße Aufnahme jedenfalls besonders leicht zu reinigen und weist keine verschmutzungsanfälligen Innenecken auf, wie es aus der DE-GM 92 12 892 bekannt ist.

Gemäß einem weiteren, besonders günstigen Aspekt der Erfindung ist die Oberfläche der Speisestation gewölbt. Diese auch ästhetisch besonders ansprechende Ausführungsform erlaubt eine Ausrichtung der Oberfläche parallel zur Lichtleiterendfläche.

Die Länge der Aufnahme ist bevorzugt etwas geringer als die Länge des Körpers des Handgeräts und deutlich geringer als die Gesamtlänge des Handgeräts einschließlich des Lichtleiters. Diese Dimensionierung erlaubt eine sichere Abstützung, aber dennoch einen kompakten Aufbau des erfindungsgemäßen Bügels.

Bevorzugt ist die Speisestation als ein flaches Element ausgebildet, dessen Höhe derart bemessen ist, daß sie in die normierten Schubladen der Zahnschränke passen. Dadurch ist es möglich, die Speisestation in solchen Schubladen unterzubringen. Durch Herausziehen des Kabels aus der Steckverbindung in der Speisestation können das Lichthärtgerät und die Aufnahme für das Lichthärtgerät vollständig getrennt und separat gelagert werden.

Weitere Vorteile, Einzelheiten und Merkmale ergeben sich aus der nachfolgenden Beschreibung eines Ausführungsbeispiels anhand der Zeichnung.

Es zeigen:
- Fig. 1: eine perspektivische Ansicht einer Ausführungsform eines erfindungsgemäßen Lichthärtgeräts, wobei das Handgerät auf der Aufnahme für das Handgerät aufgenommen ist; und
- Fig. 2: eine erfindungsgemäße Aufnahme in einer Ausführungsform, die einen Bügel aus Draht aufweist; und
- Fig. 3: eine perspektivische Ansicht einer Ausführungsform des erfindungsgemäßen Lichthärtgeräts, bei der die Aufnahme in einen separaten Ständer eingesteckt ist.

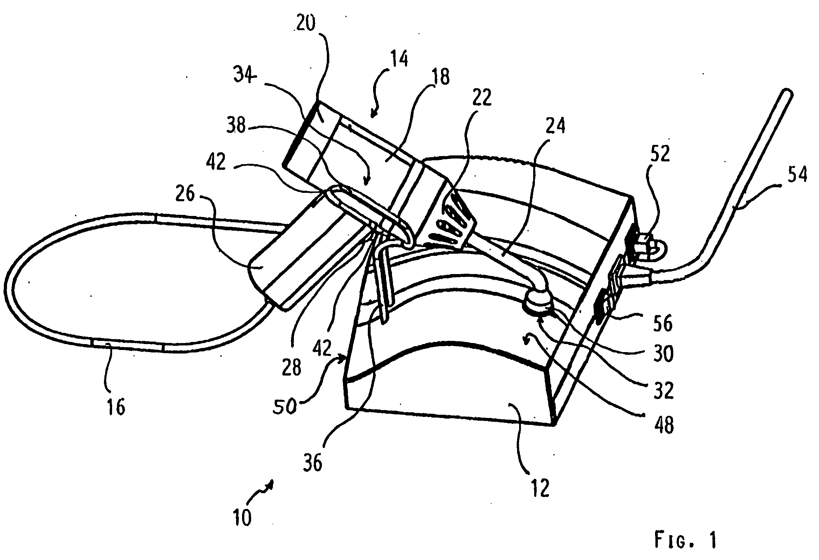

Die in Fig. 1 dargestellte Ausführungsform einer Lichthärteinheit 10 weist eine Speisestation 12 und ein Handgerät 14 auf, die über ein Kabel 16 miteinander verbunden sind. Das Kabel 16 ist an beiden Seiten mit Steckverbindungen ausgestattet und je nach Bedarf in vorgefertigen Längen lieferbar.

Das Handgerät weist im wesentlichen eine Pistolenform auf. Sein Körper 18 umfaßt einen im wesentlichen zylindrischen Teil 20, der an einem Konus 22 endet und dort zu einem Lichtleiter 24 übergeht.

Schräg nach hinten/unten erstreckt sich ein Griff 26 von dem Teil 20 weg, der in an sich bekannter Weise mit einem Schalter 28 für das Ein- und Ausschalten der in dem Körper 18 aufgenommenen Lichtquelle ausgestattet ist. Das Ende 30 des Lichtleiters 24 ist abgekröpft und weist eine Stirnfläche 32 auf, die in der in Fig. 1 dargestellten Position nach unten weist.

Erfindungsgemäß ist eine Aufnahme 34 für das Handgerät vorgesehen, die in dem dargestellten Ausführungsbeispiel auf der Speisestation 12 angebracht ist. Die Aufnahme 34 weist einen Bügel 36 auf, der das Handgerät 14 aufnimmt und an seinem Körper 18 aufgrund der besonderen Ausgestaltung sicher abstützt.

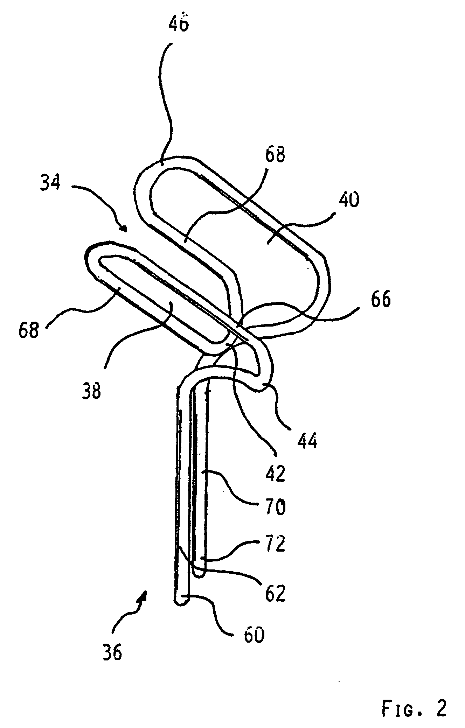

Hierzu weist der Bügel 36 zwei Seitenbögen 38 und 40 auf, von denen in Fig. 1 lediglich der Seitenbogen 38 ersichtlich ist, während der aus Fig. 2 ersichtliche Seitenbogen 40 in der Darstellung gemäß Fig. 1 von dem Körper 18 des Handgeräts 14 abgedeckt ist.

Die Seitenbögen 38 und 40 sind über einen Mittelbogen 42 miteinander verbunden. In der in Fig. 1 dargestellten Position, die die Endposition des Handgeräts 14 in der Aufnahme darstellt, umgibt der Mittelbogen 42 den Griff 26 an drei Seiten und erstreckt sich praktisch über die gesamte Länge des Griffs, betrachtet in axialer Richtung des Lichthärtgeräts.

Die Seitenbögen sind in dem dargestellten Ausführungsbeispiel so ausgebildet, daß sie nach vorne und hinten in je einem Vorderbogen 44 und einem Hinterbogen 46 enden, wie es besser aus Fig. 2 ersichtlich ist.

Die Speisestation 12 weist in ihrer Oberfläche 48 zwei etwas voneinander beabstandete Bohrungen auf, in die die beiden Enden des Bügels 36 eingesteckt sind. Nachdem der Bügel 36 bei der Handhabung, also bei dem Entnehmen und Wiederaufsetzen des Handgeräts 14, nie auf Zug nach oben belastet wird, reicht eine rastfreie Steckbarkeit der Bügelenden aus, wobei es sich versteht, daß bei Bedarf auch eine Einrastung vorgesehen sein kann.

Die Oberfläche 48 der Speisestation 12 ist in besonderer Weise ausgebildet. In der Draufsicht ist die Oberfläche 48 etwa trapezförmig. Der kurzen Seite des Trapezes benachbart ist die Oberfläche 48 stärker nach oben gewölbt als der langen Seite benachbart. Die Wölbung der Oberfläche 48 ist der kurzen Seite banchbart dementsprechend stärker ausgeprägt, wobei ein harmonischer und gleichmäßiger Übergang der Wölbung von der kurzen zur langen Trapezseite vorgesehen ist. Die Ausgestaltung ist dementsprechend so gewählt, daß die Speisestation 12 von ihrer Oberflächenform her den Eindruck eines Quaders vermittelt, der gestaucht wurde, wobei die Stauchung an einer Seite stärker als an der anderen erfolgt ist.

Diese Ausgestaltung ist nicht nur ästhetisch besonders ansprechend, sondern ergbit auch den Vorteil, daß die elektrischen Schaltkreise und die Speisung für die Versorgung des Handgeräts sich in der Speisestaion 12 ohne weiteres unterbringen lassen. Zudem führt diese Ausgestaltung in Verbindung mit dem Bügel 36 zu einem besonders guten Schutz der Stirnfläche 32. Wenn der Bügel 36 im rückwärtigen Bereich und dem kurzen Trapezschenkel benachbart gelagert ist, verbleibt das Handgerät mit etwas mehr als seiner vorderen Hälfte oberhalb der Speisestation. Insbesondere erstreckt sich auch der Lichtleiter 24 nicht nach vorne über eine Vorderkante 50 der Speisestation 12 hinaus. Vielmehr endet das abgekröpfte Ende 30 des Lichtleiters 24 an einem schräg nach unten abfallenden Bereich der Oberfläche 48, so daß die Stirnfläche 32 sich dort im wesentlichen parallel zur Oberfläche 48 erstreckt.

Diese Ausgestaltung erlaubt es, das Handgerät so zu plazieren, daß der Griff 28 besonders frei zugänglich ist, nachdem sich unterhalb des Griffes 26 lediglich die Speisestation 12 erstreckt, aber dennoch die Stirnfläche 32 besonders gut zu schützen.

Die Basisstation kann in weiten Bereichen an die Erfordernisse angepaßt werden. Während bei dem dargestellten Ausführungbeispiel eine Steckverbindung 52 für das Kabel 16, ein Netzanschluß 54 und auch ein Netzschalter 56 nebeneinander angeordnet sind, versteht es sich, daß die Anordnung dieser Anschlüsse und Bedienungselemente in beliebiger Weise an die Erfordernisse angepaßt werden kann. Auch können bei Bedarf Lüftungsschlitze für die gegebenenfalls notwendige Kühlung eines Netztransformators oder beispielsweise der Strom- und Spannungsregelung für die Speisung des Handgeräts 14 angeordnet sein, bevorzugt an einer senkrechten Wand der Speisestation 12. Insgesamt ist jedoch die kompakte Ausgestaltung mit glatten Oberflächen der erfindungsgemäßen Speisestation 12 besonders bevorzugt und reinigungsfreundlich.

Während das dargestellte Ausführungsbeispiel das erfindungsgemäße Lichthärtgerät 14 in einer Position zeigt, bei welcher der Bügel 36 auf die Speisestation 12 aufgesteckt ist, ist es gemäß einer modifizierten Ausgestaltung vorgesehen, eine Zusatzhalterung vorzusehen, die aber bei Bedarf auch als alleinige Halterung einsetzbar ist. Die Zusatzhalterung besteht aus einem Bügel 36 gemäß Fig. 2, der in geeigneter Weise gelagert ist. Beispielsweise kann der Bügel 36 in eine Lagerplatte eingesteckt sein, die sich dann bevorzugt parallel zum Handgerät 14 erstreckt und bis unter das Lichtleiterende reicht. Eine entsprechende Lagerplatte kann auch als Gußteil ausgebildet sein und beispielsweise über eine Klemmschraubverbindung an einem Behandlungstisch befestigt sein, während die Speisestation 12 verdeckt, beispielsweise auch in einer Schublade, aufgenommen sein kann.

Die bevorzugte Ausgestaltung des erfindungsgemäßen Bügels 36 ist aus Fig. 2 ersichtlich. Von einem Ende 60 des Bügels 36 erstreckt sich ein aufrechter Schenkel 62 nach oben. An dem oberen Ende des aufrechten Schenkels 62 ist der den Bügel 36 bildende Draht nach vorne abgebogen und verläuft im wesentlichen horizontal schräg zu einem Vorderbogen 44. Dort beginnt der Seitenbogen 38, und der Draht ist im Vorderbogen 44 um etwa 180° nach hinten abgebogen. Der Hauptschenkel des Seitenbogens 38 verläuft nicht horizontal, sondern schräg nach aufwärts, entsprechend der Ausrichtung des Handgeräts 14 in der Aufnahme 34.

Am hinteren Ende des Hauptschenkels 66 weist der Seitenbogen 38 einen Hinterbogen 46 auf, der ebenfalls eine Richtungsänderung des Drahts um etwa 180° bedingt, so daß der Draht sich von dem Hinterbogen 46 parallel dem Hauptschenkel 66 in einem Nebenschenkel 68 des Seitenbogens 38 erneut nach vorne erstreckt, und zwar schräg nach unten.

Der Nebenschenkel 68 erstreckt sich bis etwa in den aufrechten Bereich des Schenkels 62 und ist dort zum Mittelbogen 42 hin abgebogen. Der Mittelbogen 42 verläuft nach schräg unten, so daß der Handgriff 26 des Handgeräts 14 im wesentlichen passend und bevorzugt leicht klemmend zwischen den Nebenschenkeln 68 des linken und des rechten Seitenbogens 38 und 40 aufgenommen ist, während der Mittelbogen 42 einen Anschlag nach vorne bildet.

Durch die Absenkung des Mittelbogens 42 auf unterhalb der durch die beiden Nebenschenkel 68 aufgespannten schrägen Ebene läßt sich erreichen, daß bei normaler Einführung des Handgeräts 14 in die Aufnahme kein Kontakt zwischen dem Ende 30 des Lichtleiters 24 und dem Mittelbogen 42 erfolgen kann.

Der Seitenbogen 40 ist symmetrisch zum Seitenbogen 38 ausgebildet, so daß der Bügel 36 über einen aufrechten Schenkel 70 an einem Ende 72 endet.

In einer modifizierten Ausgestaltung ist es vorgesehen, daß auch die Vorderbögen 44 von der Achse des Handgeräts 14 nach außen abgebogen ausgebildet sind. Bei dieser Ausgestaltung erstreckt sich der Übergangsbereich zwischen den aufrechten Schenkeln 62 bzw. 70 und den Vorderbögen 44 in der Verlängerung der Nebenschenkel 68 und bildet die vordere/untere Auflage für den Körper 18 des Handgeräts 14. Von dieser Auflage ausgehend sind die Vorderbögen 44 gegenüber der Darstellung in Fig. 2 nach außen, also sich radial vom Handgerät 14 wegerstreckend, abgebogen, so daß auch bei stark verdrehter Einführung des abgekröpften Endes 30 des Lichtleiters nicht die Gefahr besteht, daß das Ende dort einfädelt.

Nachdem eine derartige Art des Einführens jedoch in der Praxis sehr wenig relevant ist, ist die hier dargestellte Ausführungsform des erfindungsgemäßen Bügels 36 gemäß Fig. 2 bevorzugt.

Es versteht sich, daß der erfindungsgemäße Bügel 36 in gleicher Weise sowohl in einem Zusatzhalter als auch auf der Speisestation 12 aufsteckbar ist. Bei Bedarf kann auch lediglich ein Bügel 36 vorgesehen sein, der je nach Wunsch des Kunden, insbesondere also des behandelnden Zahnarztes, von dem Zusatzhalter auf die Speisestation 12 umsteckbar ist.

Gemäß einer weiteren, bevorzugten Ausgestaltung ist es vorgesehen, daß die Aufnahme selbst als Ständer ausgebildet ist. Bei dieser Ausgestaltung ist dementsprechend kein Zusatzhalter erforderlich, und die Aufnahme kann von der Basisstation abgezogen und auf einer beliebigen ebenen Oberfläche abgestellt werden. Die Aufnahme kann beispielsweise einen Handstückhalter bilden, der drei Füße aufweist, die so angeordnet sind, daß auch bei aufgelegtem Handgerät 14 die Stabilität der Abstützung gewährleistet ist.

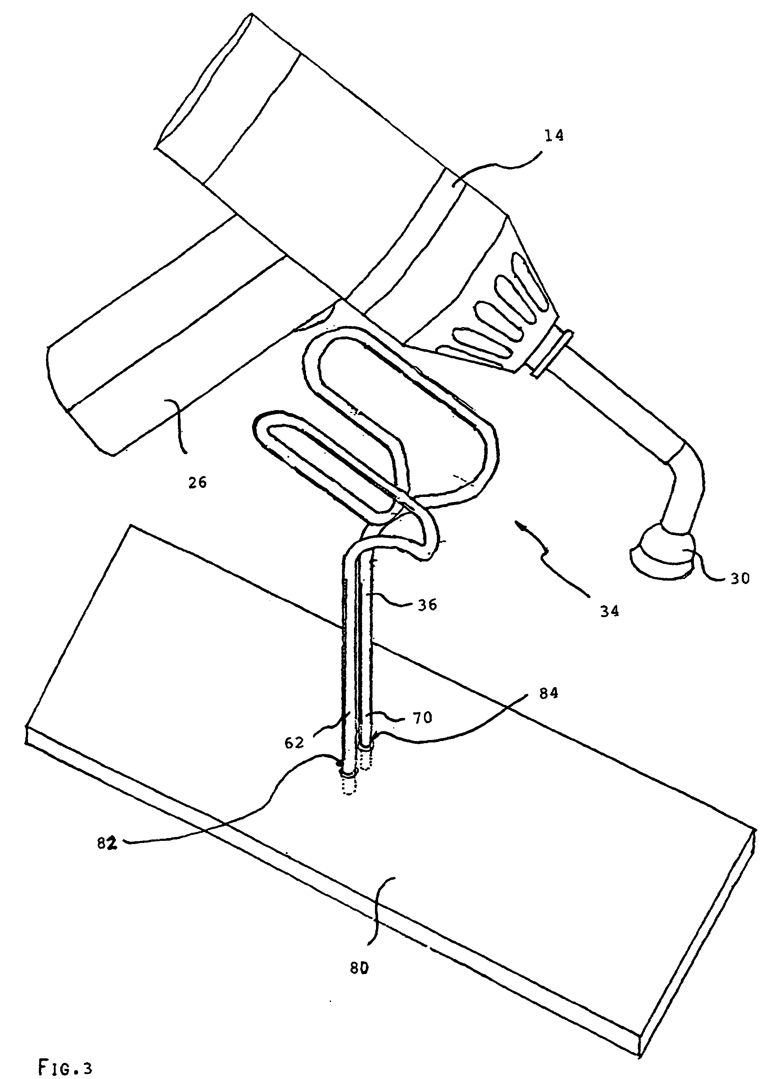

In Fig. 3 ist eine mögliche Ausgestaltung eines Ständers 80 dargestellt. Der Ständer nimmt den Bügel 36 in zwei Ausnehmungen 82 und 84 auf, die sich als Bohrungen in ausreichender Tiefe nach unten erstrecken, um eine stabile Abstützung zu gewährleisten. Bevorzugt sind hierzu die Ausnehmungen 82 und 84 in metallischen Steckhülsen ausgebildet, die ein verschleißfreies Einstecken und Entnehmen des Bügels 36 ermöglichen, wobei die Passung gegenüber den Schenkeln 62 und 70 spielfrei gewählt ist.

In dem dargestellten Ausführungsbeispiel erstreckt sich der Ständer 80 als im wesentlichen flachrechteckige Platte über die gesamte Länge des Lichthärtgeräts 14, so daß auch das Ende 30 des Lichtleiters sich deutlich oberhalb des Ständers 80 befindet und diesen nicht nach vorne überragt.

Der Ständer 80 kann in beliebiger geeingneter Weise auf einer Unterlage abstützbar sein. Beispielsweise kann er als Metallplatte ausgebildet sein, so daß bereits aufgrund des Eigengewichts eine ausreichende Stabilität gewährleistet ist. Es ist auch möglich, den Ständer 80 mit Saugfüßen auszustatten, die eine sichere Lagerung auf einer tischähnlichen Unterlage ermöglichen.

## Patentansprüche

1. Lichthärteinheit, insbesondere zur Lichthärtung von Dentalmassen, bestehend aus einem Lichthärtgerät mit einem Griff, wobei das Lichthärtgerät im Wesentlichen eine Pistolenform aufweist, und der Griff über ein Kabel mit einer Speisestation verbunden ist, wobei die Speisestation eine Aufnahme für die Abstützung des Lichthärtgeräts aufweist, und mit einem Ständer, wobei die Aufnahme (34) lösbar an der Speisestation (12) gelagert ist und die Aufnahme (34) mit dem Lichthärtgerät (14) getrennt von der Speisestation über den Ständer (80) abstellbar ist.

2. Lichthärteinheit nach Anspruch 1, **dadurch gekennzeichnet, dass** die Aufnahme (34) einen Bügel (36) aufweist, mit welchem sie mindestens teilweise vor dem Griff (26) abstützbar ist.

3. Lichthärteinheit nach Anspruch 1, **dadurch gekennzeichnet, dass** der Bügel (36) eine sich beidseits und unter dem Lichthärtgerät erstreckende, im Wesentlichen geneigte Auflage bietet.

4. Lichthärteinheit nach Anspruch 2 oder 3, **dadurch gekennzeichnet, dass** der Bügel (36) aus gebogenem Draht besteht, der mit seinen beiden Enden (60, 72) in eine Halterung einsteckbar ist.

5. Lichthärteinheit nach einem der vorhergehenden Ansprüche, **dadurch gekennzeichnet, dass** das Kabel (16) über eine Steckverbindung (52) lösbar an dem Griff und der Speisestation (12) gelagert ist.

6. Lichthärteinheit nach einem der vorhergehenden Ansprüche, **dadurch gekennzeichnet, dass** das Kabel (16) in unterschiedlichen Längen vorgefertigt und je nach Bedarf anschließbar ist.

7. Lichthärteinheit nach einem der vorhergehenden Ansprüche, **dadurch gekennzeichnet, dass** der Draht des Bügels (36) zwei Seitenbögen (38, 40) aufweist, die über einen Mittelbogen (42) miteinander verbunden sind.

8. Lichthärteinheit nach einem der vorhergehenden Ansprüche, **dadurch gekennzeichnet, dass** der Bügel (36) von einem seiner Steckenden (60, 72) aus betrachtet anschließend an einen aufrechten Schenkel (62, 70) sich nach - bezogen auf das Lichthärtgerät (14) - vorne erstreckt und in den Seitenbogen (38, 40) übergeht, in dessen Verlauf der Draht sich parallel zur Achse des Lichthärtgeräts (14) nach hinten erstreckt und hieran anschließend nach unten/innen zum Mittelbogen (42) hin abgebogen ist.

9. Lichthärteinheit nach einem der vorhergehenden Ansprüche, **dadurch gekennzeichnet, dass** die Seitenbögen (38, 40) des Bügels (36) eine Längserstreckung zwischen einem Vorderbogen (44) und einem Hinterbogen (46) aufweisen, die deutlich größer als die Griffstärke ist und insbesondere etwa die Hälfte des Körpers (18) des Lichthärtgeräts (14) überdeckt.

10. Lichthärteinheit nach einem der vorhergehenden Ansprüche, **dadurch gekennzeichnet, dass** der Griff (26) von einem Mittelbogen (42) des Bügels (36) aufgenommen und umgeben ist.

11. Lichthärteinheit nach einem der vorhergehenden Ansprüche, **dadurch gekennzeichnet, dass** der Bügel (36) so geformt ist, dass er das Lichthärtgerät (14) in einer eindeutigen Position hält.

12. Lichthärteinheit nach einem der vorhergehenden Ansprüche, **dadurch gekennzeichnet, dass** das Lichthärtgerät (14) einen Lichtleiter (24) mit einem Lichtleiterende (30) aufweist, das nach schräg unten abgebogen ist.

13. Lichthärteinheit nach Anspruch 11, **dadurch gekennzeichnet, dass** das Lichtleiterende (30) in einer Fläche (32) endet, die bei in den Bügel (36) eingesetztem Lichthärtgerät (14) der Oberfläche (48) der Speisestation (12) zugewandt ist.

14. Lichthärteinheit nach einem der vorhergehenden Ansprüche, **dadurch gekennzeichnet, dass** ein Sicherheitsabstand von wenigen cm, insbesondere 1 bis 2 cm, zwischen der Oberfläche (48) der Speisestation (12) und dem Lichtleiterende (30) bei aufgelegtem Lichthärtgerät eingehalten ist.

15. Lichthärteinheit nach einem der vorhergehenden Ansprüche, **dadurch gekennzeichnet, dass** eine von der Speisestation (12) getrennte Aufnahme vorgesehen ist, die einen Bügel (36) für die Ablage des Lichthärtgeräts (14) aufweist, die als Halterung ausgebildet ist.

16. Lichthärteinheit nach einem der vorhergehenden Ansprüche, **dadurch gekennzeichnet, dass** die Aufnahme einen Ständer (80) aufweist oder auf diesem lagerbar ist, der auf einer Unterlage wie einem Tisch abstellbar ist.

17. Lichthärteinheit nach einem der vorhergehenden Ansprüche, **dadurch gekennzeichnet, dass** die Halterung für das Lichthärtgerät (14) eine Lagerplatte aufweist, die sich bis unter ein Lichtleiterende (30) des Lichthärtgeräts (14) erstreckt.

18. Lichthärteinheit nach einem der vorhergehenden Ansprüche, **dadurch gekennzeichnet, dass** eine Lagerplatte der Halterung für das Lichthärtgerät (14) eine Klemmschraubverbindung für die Befestigung an einem Tisch oder dergleichen aufweist.

19. Lichthärteinheit nach einem der Ansprüche 2 bis 18, **dadurch gekennzeichnet, dass** der Bügel an seiner Oberseite schräg verlaufende Drähte aufweist.

20. Lichthärteinheit, insbesondere zur Lichthärtung von Dentalmassen, bestehend aus einem lichthärtgerät mit einem Griff, wobei das Lichthärtgerät im Wesentlichen eine Pistolenform aufweist, und mit einer Speisestation (12), **dadurch gekennzeichnet, dass** eine Aufnahme (34) für die Abstützung des Lichthärtgeräts (14) vorgesehen ist, die lösbar auf einem auf einer Unterlage abstellbaren oder an ihr befestigbaren Ständer (80) befestigt ist und auf welcher das Lichthärtgerät (14) getrennt von der Speisestation (12) lagerbar ist.

## Claims

1. A light curing unit, in particular for the light curing of dental compounds, comprising a light curing apparatus with a handle, wherein the light curing apparatus is substantially pistol-shaped and the handle is connected via a cable to a supply station, wherein the supply station has a receptacle for supporting the light curing apparatus, and with a stand, wherein the receptacle (34) is mounted releasably on the supply station (12) and the receptacle (34) with the light curing apparatus (14) can be set down above the stand (80) separately from the supply station.

2. A light curing unit according to Claim 1, **characterised in that** the receptacle (34) has a clip (36) with which it can be supported at least partly in front of the handle (26).

3. A light curing unit according to Claim 1, **characterised in that** the clip (36) provides a substantially inclined support extending on either side of and under the light curing apparatus.

4. A light curing unit according to Claim 2 or 3, **characterised in that** the clip (36) consists of bent wire which with its two ends (60,72) can be inserted into a mounting.

5. A light curing unit according to any one of the preceding Claims, **characterised in that** the cable (16) is mounted releasably on the handle and the supply station (12) via a plug connector (52).

6. A light curing unit according to any one of the preceding Claims, **characterised in that** the cable (16) is prefabricated in different lengths and can be connected according to requirements.

7. A light curing unit according to any one of the preceding Claims, **characterised in that** the wire of the clip (36) has two lateral elbows (38,40) which are connected to one another via a middle elbow (42).

8. A light curing unit according to any one of the preceding Claims, **characterised in that**, viewed from one of its plug-in ends (60,72), the clip (36) extends adjacent an upright leg (62,70) in a forward direction, with respect to the light curing apparatus (14), and merges into the lateral elbow (38,40), in the course of which the wire extends rearwardly parallel to the axis of the light curing apparatus (14) and subsequent thereto is bent downwardly/inwardly towards the middle elbow (42).

9. A light curing unit according to any one of the preceding Claims, **characterised in that** the lateral elbows (38,40) of the clip (36) have a longitudinal extension between a front elbow (44) and a rear elbow (46), which is clearly larger than the handle thickness and in particular overlaps approximately half the body (18) of the light curing apparatus (14).

10. A light curing unit according to any one of the preceding Claims, **characterised in that** the handle (26) is received and enclosed by a middle elbow (42) of the clip (36).

11. A light curing unit according to any one of the preceding Claims, **characterised in that** the clip (36) is so shaped that it holds the light curing apparatus (14) in a definite position.

12. A light curing unit according to any one of the preceding Claims, **characterised in that** the light curing apparatus (14) has a light guide (24) with a light guide end (30) which is bent obliquely downwards.

13. A light curing unit according to Claim 11, **characterised in that** the light guide end (30) terminates in a surface (32) which faces the surface (48) of the supply station (12) when the light curing apparatus (14) is fitted in the clip (36).

14. A light curing unit according to any one of the preceding Claims, **characterised in that** a safety clearance of several cm, in particular 1 to 2 cm, is observed between the surface (48) of the supply station (12) and the light guide end (30) when the light curing apparatus is in place.

15. A light curing unit according to any one of the preceding Claims, **characterised in that** a receptacle is provided separate from the feed station (12), which has a clip (36) for receiving the light curing apparatus (14) and which is in the form of a mounting.

16. A light curing unit according to any one of the preceding Claims, **characterised in that** the receptacle has a stand (80) or can be mounted thereon, which stand can be set down on a base such as a table.

17. A light curing unit according to any one of the preceding Claims, **characterised in that** the mounting for the light curing apparatus (14) has a base plate which extends to below a light guide end (30) of the light curing apparatus (14).

18. A light curing unit according to any one of the preceding Claims, **characterised in that** a base plate of the mounting for the light curing apparatus (14) has a clamping screw connection for fastening to a table or the like.

19. A light curing unit according to any one of Claims 2 to 18, **characterised in that** on its upper side the clip has obliquely extending wires.

20. A light curing unit, in particular for the light curing of dental compounds, comprising a light curing apparatus with a handle, wherein the light curing apparatus is substantially pistol-shaped, and with a supply station (12), **characterised in that** a receptacle (34) is provided for supporting the light curing apparatus (14) and is fastened releasably to a stand (80) which can be set down on a base or can be fastened thereto, and on which the light curing apparatus (14) can be mounted separately from the supply station (12).

## Revendications

1. Dispositif de photopolymérisation, en particulier pour photopolymériser des matériaux de restauration dentaire, composé d'une lampe à photopolymériser comprenant une poignée, la lampe à photopolymériser ayant essentiellement une forme de pistolet et la poignée étant reliée par l'intermédiaire d'un câble à un boîtier d'alimentation, le boîtier d'alimentation présentant un réceptacle pour porter la lampe à photopolymériser, et comprenant un socle, le réceptacle (34) étant fixé de manière amovible sur le boîtier d'alimentation (12) et le réceptacle (34) pouvant être posé avec la lampe à photopolymériser (14) séparément du boîtier d'alimentation sur le socle (80).

2. Dispositif de photopolymérisation selon la revendication 1, **caractérisé en ce que** le réceptacle (34) présente une armature (36) avec laquelle il peut être porté au moins partiellement devant la poignée (26).

3. Dispositif de photopolymérisation selon la revendication 1, **caractérisé en ce que** l'armature (36) offre un appui essentiellement incliné s'étendant des deux côtés et en dessous de la lampe à photopolymériser.

4. Dispositif de photopolymérisation selon la revendication 2 ou 3, **caractérisé en ce que** l'armature (36) se compose d'un fil métallique courbé qui peut être inséré dans un support à l'aide de ses deux extrémités (60, 72).

5. Dispositif de photopolymérisation selon l'une quelconque des revendications précédentes, **caractérisé en ce que** le câble (16) est fixé à la poignée et au boîtier d'alimentation (12) de manière amovible par l'intermédiaire d'un connecteur (52).

6. Dispositif de photopolymérisation selon l'une quelconque des revendications précédentes, **caractérisé en ce que** le câble (16) est préfabriqué et peut être connecté en différentes longueurs en fonction des besoins.

7. Dispositif de photopolymérisation selon l'une quelconque des revendications précédentes, **caractérisé en ce que** le fil métallique de l'armature (36) présente des arceaux latéraux (38, 40) qui sont reliés l'un à l'autre par l'intermédiaire d'un arceau central (42).

8. Dispositif de photopolymérisation selon l'une quelconque des revendications précédentes, **caractérisé en ce que** l'armature (36), vu depuis l'une de ses extrémités d'insertion (60, 72), s'étend ensuite sur une branche droite (62, 70) vers l'avant - par rapport à la lampe à photopolymériser (14) - et se prolonge dans l'arceau latéral (38, 40), à la suite duquel le fil métallique s'étend parallèlement à l'axe de la lampe à photopolymériser (14) vers l'intérieur et se courbe à partir de là vers le bas/l'intérieur pour former l'arceau central (42).

9. Dispositif de photopolymérisation selon l'une quelconque des revendications précédentes, **caractérisé en ce que** les arceaux latéraux (38, 40) de l'armature (36) présentent un allongement longitudinal entre un arceau avant (44) et un arceau arrière (46) qui est nettement plus grand que l'épaisseur de la poignée et qui couvre en particulier environ la moitié du corps (18) de la lampe à photopolymériser (14).

10. Dispositif de photopolymérisation selon l'une quelconque des revendications précédentes, **caractérisé en ce que** la poignée (26) est retenue et entourée par un arceau central (42) de l'armature (36).

11. Dispositif de photopolymérisation selon l'une quelconque des revendications précédentes, **caractérisé en ce que** l'armature (36) est formée de manière à retenir la lampe à photopolymériser (14) dans une seule position.

12. Dispositif de photopolymérisation selon l'une quelconque des revendications précédentes, **caractérisé en ce que** la lampe à photopolymériser (14) présente un embout lumineux (24) avec une extrémité d'embout lumineux (30) qui est recourbée obliquement vers le bas.

13. Dispositif de photopolymérisation selon la revendication 11, **caractérisé en ce que** l'extrémité de l'embout lumineux (30) se termine par une surface (32) qui est tournée vers la surface (48) du boîtier d'alimentation (12) lorsque la lampe à photopolymériser (14) est placée dans l'armature (36).

14. Dispositif de photopolymérisation selon l'une quelconque des revendications précédentes, **caractérisé en ce qu'**une distance de sécurité de quelques cm, en particulier de 1 cm à 2 cm, est maintenue entre la surface (48) du boîtier d'alimentation (12) et l'extrémité de l'embout lumineux (30) lorsque la lampe à photopolymériser est posée.

15. Dispositif de photopolymérisation selon l'une quelconque des revendications précédentes, **caractérisé en ce qu'**un réceptacle séparé du boîtier d'alimentation (12), qui présente une armature (36) pour recevoir la lampe à photopolymériser (14) et qui est réalisé sous forme de support, est prévu.

16. Dispositif de photopolymérisation selon l'une quelconque des revendications précédentes, **caractérisé en ce que** le réceptacle présente un socle (80), ou peut être fixé sur celui-ci, qui peut être posé sur une base tel qu'une table.

17. Dispositif de photopolymérisation selon l'une quelconque des revendications précédentes, **caractérisé en ce que** le support pour la lampe à photopolymériser (14) présente une embase qui s'étend jusqu'en dessous de l'extrémité de l'embout lumineux (30) de la lampe à photopolymériser (14).

18. Dispositif de photopolymérisation selon l'une quelconque des revendications précédentes, **caractérisé en ce qu'**une embase du support pour la lampe à photopolymériser (14) présente un assemblage par vis de serrage pour la fixation sur une table ou analogue.

19. Dispositif de photopolymérisation selon l'une quelconque des revendications 2 à 18, **caractérisé en ce que** l'armature présente sur sa partie supérieure des fils métalliques s'étendant obliquement.

20. Dispositif de photopolymérisation, en particulier pour photopolymériser des matériaux de restauration dentaire, composé d'une lampe à photopolymériser comprenant une poignée, la lampe à photopolymériser ayant essentiellement une forme de pistolet, et comprenant un boîtier d'alimentation (12), **caractérisé en ce qu'**un réceptacle (34) est prévu pour porter la lampe à photopolymériser (14) , lequel est fixé de manière amovible sur un socle (80) pouvant être posé sur une base ou fixé à celle-ci et sur lequel la lampe à photopolymériser (14) peut être posée séparément du boîtier d'alimentation (12).
